# EUROPEAN PATENT SPECIFICATION

(11) **EP 1 055 232 B1**
(45) Date of publication and mention of the grant of the patent: **15.05.2002**
(21) Application number: 99910178.5
(22) Date of filing: 03.02.1999
(51) Int. Cl.: G11B 7/24

(54) **OPTICAL RECORDING MEDIUM BASED ON THIN RECORDING LAYERS**
OPTISCHES AUFZEICHNUNGSMEDUM MIT DÜNNEN AUFZEICHNUNGSSCHICHTEN
SUPPORT D'ENREGISTREMENT OPTIQUE SUR COUCHES D'ENREGISTREMENT MINCES

(30) Priority: 13.02.1998 EP 98200452; 17.03.1998 EP 98200838
(43) Date of publication of application: 29.11.2000
(73) Proprietor: Samsung Advanced Institute of Technology, Suwon 440-600 (KR); Akzo Nobel N.V., 6824 BM Arnhem (NL)
(72) Inventor: KIM, Sung, Hoon, Suwon 440-600 (KR); MAHY, Jan, Willem, Gaston, NL-6825 AB Arnhem (NL); DUBBELDAM, Gerrit, Cornelis, NL-6904 PH Zevenaar (NL); VAN WIJK, Freddy, Gerhard, Hendrikus, NL-6814 BK Arnhem (NL)
(74) Representative: Schalkwijk, Pieter Cornelis
(86) International application number: EP9900666
(87) International publication number: WO9941742

(56) References cited:
- EP-A- 0 777 224
- EP-A- 0 836 179

## Description

The present invention is in the field of optical recording media, such as compact discs (CDs) and digital tapes or cards, more particularly, so-called WORM media (write-once-read-many-times compact discs or tapes) and rewritable CDs and tapes. These types of media allow information to be written by the consumer.

In conventional read-only CDs the information is stored in pits which are embossed in the disc. The reading is based on diffraction on the regular pit-edge structure. Interference of the diffracted orders is dependent on the position of the laser spot. This results in a modulation in reflection, which is used for reading the information. The conventional read-only CDs are only suitable for large-scale production as the production steps (for obtaining a written disc) are rather complicated and therefore only cost effective in mass production. Hence there is need for CDs and digital tapes or cards which can be produced in smaller quantities or can even be written by the consumer himself. In EP 0,353,391 an optical recording medium is described comprising a light transmitting substrate having a deformable surface, a light absorptive layer overlaying the deformable surface, and a light reflective layer overlaying the light absorptive layer, said deformable surface being deformable by energy generated upon absorption of the writing laser beam by the light absorptive layer, to form optically readable pits. The reading is again based on interference of diffracted orders. During irradiation with the reading laser the light travels through the light absorptive layer and is reflected by the reflective layer. As the refractive index within a pit differs from the refractive index outside it (land), the optical pathlength within the pit differs from that of the land. The laser light which falls within the pit interferes with the light which falls on the land causing diffraction. The interference of the diffracted orders depends on the exact position of the reading spot. The resulting reflection modulation is used for reading the information. However, the recording layer of this recording medium has a strong absorption in the 600 - 720 nm range. Therefore, discs made according to EP 0,353,391 have a low reflectance (less than 10%) at 650 nm, which makes them unsuitable for reading on DVD players, which require more than 20% reflectance at 650 nm.

An optical recording medium based on the principle of a Fabry-Perot etalon has been disclosed in WO 97/21216. This optical recording medium comprises a grooved substrate, a partial mirror, a buffer layer comprising a high-molecular weight material, and a mirror. It has now been found that under very specific conditions no high-molecular weight material is required and extremely thin buffer layers can be used, and that optical recording media so obtained can more simply be produced, and are less expensive.

Another optical recording medium based on the principle of a Fabry-Perot etalon is disclosed in EP 777,224. However, this reference suggests a considerable thickness of the buffer layer of at least 170 nm, whereas the depth of the groove image is not disclosed at all. Accordingly, EP 836,179 does not suggest thin buffer layers and also not the depth of the groove image.

According to the present invention the optical recording medium comprises the following layers:
a) a polycarbonate substrate with a groove (1) having a depth d_{gu} in the unwritten state between 170 and 270 nm, superposed by
b) a recording layer comprising a partial mirror (2), superposed by a thick reflective layer (4) of Au, Al, Ag, or alloys thereof, together forming a Fabry-Perot etalon wherein the reflection of the land portion at 770-790 nm is in the high reflective state, superposed by
c) a protective coating (5),
wherein the partial mirror (2) is of a material selected from Ag, Ta, V, Ni, Cr, Si, alloys thereof, and oxides thereof, and having a transmission between 40% and 90% at 770-790 nm on a portion of the substrate without a groove, superposed by a buffer layer (3) comprising an organic material having a refractive index n_{bu} between 1.45 and 3.0, and an extinction coefficient k_{bu} between 0 and 0.3, both measured in its solid state at 770-790 nm in the unwritten state, and thickness d_{b} on the land between 10 and 70 nm, having a depth dᵢ of the groove image being 40% to 90% of the depth d_{gu}.

By virtue of the partial mirror a Fabry-Perot etalon is created. Information can be written by deformation of one or more of the partial mirror, the buffer layer, the thick reflective layer, or the substrate. The deformation effects change or destroy the Fabry-Perot etalon and a decrease in reflection occurs. As deformation effects are used for writing, a non-liquid-crystalline high-molecular weight material can be used in the buffer layer. The tracking (keeping the writing laser within the grooves) can take place by employing the difference in reflected amplitude and/or phase of the partial mirror/substrate interface within and outside the groove, resulting in diffraction as will be further explained below.

For convenience's sake, the term CD will be used to refer to all optical recording media according to the invention.

It is preferred for the recording medium according to the invention to be in the high reflective state of Fabry-Perot with a reflectance above 50% in the unwritten state when the read-out spot of the laser is positioned over the groove and a reflectance above 60% for the read-out spot over the land, because the conventional CD-players need about 20% background reflection from the groove in the written state for tracking, and the CD-standard demands 60% writing contrast. It was found that with partial mirror material fulfilling the complex index of refraction requirements given-above, CDs could be made according to the CD standard. If, however, CD-players become available requiring smaller background reflection, lower reflectance than 50% can be employed. For high-density recording media a reflectance which is above 20% in the unwritten state is preferred. Upon writing the Fabry-Perot is either detuned or destroyed by deformation of one or more of the partial mirror, the buffer layer, the thick reflective layer, or the substrate, resulting in a decrease in reflection by at least 40% of the unwritten state.
In the known read-only CDs the recorded information is stored in a spiral track in which regions of low reflectance (written groove area) are alternated with regions where the background reflectance (unwritten groove area) is higher than 65%. For conventional CDs the pit length varies from 0.9 to 3.3 µm in 0.3 µm steps. In the longest pits (generating the 11T signal) the reflectance must drop to below 40% of the reflectance in the unwritten state. The read-out laser in a conventional CD-player has a wavelength between 780 and 830 nm, in general 780 ± 10 nm. In order to be compatible with the read-only CD, a CD according to the invention should have a reflectance in the unwritten state of 65% and the reflectance in the longest pit should be below 40% of the reflectance in the unwritten state, when using a conventional read-out laser for CD-players.
The present invention provides recordable CDs (CD-R) which when recorded are compatible with standard CDs and playable by digital versatile disc players (DVDP).

The optical recording medium according to the invention comprises a grooved substrate (1). The medium is read through the substrate. Therefore, the substrate should be optically transparent for the laser light used for reading and writing. In conventional CD-players laser light with a wavelength of 780 nm is used. Polycarbonate substrates are preferred for their price and ease of handling. Further, the properties of polycarbonate substrates are within the CD standard. Polycarbonate is susceptible to chemical attack by almost every solvent normally used for applying the buffer layer material. With the CD according to the invention this problem is reduced in two ways: first of all, the partial mirror may protect the substrate from solvent attack. Secondly, as non-liquid-crystalline material is used for the buffer layer, a large freedom of choice of solvent is created. Thus, a relatively mild solvent can be used. Accordingly, in the case of the CD according to the invention polycarbonate can be readily used as a substrate. For DVD-R the substrate has to be transparent in the wavelength range of 610 to 700 nm, or below.

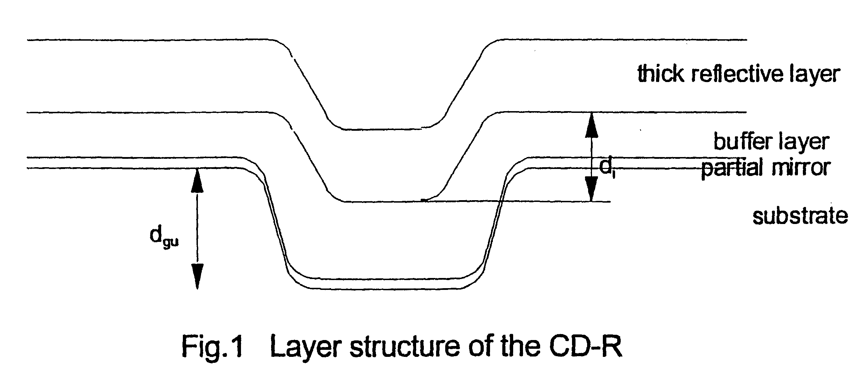

As mentioned-above, a grooved substrate is used for the CD according to the invention. Said groove is a spiral-shaped track which is pressed in the substrate. This track is used to control the laser spot position during reading and writing. As the partial mirror has a high index of refraction, the tracking can be done via the difference in reflected amplitude or phase of the partial mirror/substrate interface within and outside the groove.
The width and depth of the groove are decisive for the tracking. Usually a track width of 0.1- 1.2 µm is used. The track depth is an important parameter which has to be chosen in relation with thicknesses of the buffer layer and partial mirror, and is in the unwritten state in the range of 170-270 nm. We have found that such groove depth in combination with a buffer layer thickness on the land of 10-70 nm, and preferably 15-40 nm, in combination with a partial mirror selected from Ag, Ta, Ni, Cr, Si, alloys thereof, and oxides thereof, results in an optimal tracking contrast, while preserving the reflection properties. Such buffer layer thicknesses are substantially smaller than those disclosed in the prior art. It is thereby preferred that the groove image (the sum of the groove depth and the buffer layer thickness minus the minimum thickness of the buffer layer in the groove in the unwritten state; see Figure 1) is 40-90% of the groove depth d_{gu}. Preferably, the refractive index n_{bw} and the extinction coefficient k_{bw} of the buffer layer in the written state, are smaller than n_{bu} and k_{bu} of the buffer layer in the unwritten state. Excellent results are obtained when n_{bu} and k_{bu} are between 1.8-2.2, and between 0-0.05, respectively. It is also preferred if the depth d_{gw} of the written portion of the groove is smaller than the depth of the groove d_{gu} in the unwritten state.

In order to reduce the loss of laser light by reflection at the air/substrate interface, the substrate may be provided with an anti-reflection structure on the side not covered with the thin reflective layer.

For the partial mirror (2) Ag, Ta, V, Ni, Cr, Si, alloys thereof, and oxides thereof can be employed as long as the layer can be made thin enough to be partially transparent for the laser light. This is usually in the range of 0.3-50 nm, corresponding to about 40-90% transmission at 770-790 nm on a portion of the substrate without a groove. The complex indices of refraction of various materials are listed in Handbook of Optical Constants of Solids, parts 1 and 2, ed. Palik, Acc. Press (1985). Thin metal films show a reduced metal like behavior and a person skilled in the art can easily choose a suitable material. Preferably, materials such as silver and tantalum, alloys and oxides thereof are chosen.

Metals usually have a high imaginary part of the index of refraction. This means that they are highly reflective when used in transparent environment (such as polycarbonate) and absorptive, provided that the product nk is high as well. The absorption α per µm is expressed as -2πnk/λ (λ in µm). Accordingly, upon writing with a laser the laser light is reflected (tracking) by the Fabry-Perot system and absorbed by the metal partial mirror. The absorbed laser light is converted into heat, and deformation of one or more of the partial mirror, the buffer layer, the thick reflective layer, or the substrate occurs.
Non-absorptive materials as silver, or alloys thereof, or silicon, silicon nitride, silicon-germanium, silica, SiO, SiO-germanium, etc. have usually one high part of the index of refraction (the real or imaginary part). This means that the material is reflective, but hardly absorptive. Upon writing with a laser on CDs with this type of partial mirror, the laser light is reflected by the Fabry-Perot system, but the absorption of the laser light will mainly have to take place in the buffer layer. Thus, when employing a non-metal partial mirror in the CD according to the invention, it is preferred to use a highly absorptive buffer layer. Especially preferred are silicon-germanium alloys, silicon nitride, and silicon because of their low imaginary parts of indices of refraction. The partial mirror may be applied onto the substrate in any conventional method normally used in the field such as vacuum deposition, electron beam deposition and sputtering.

The dyes present in the buffer layer serve to convert the writing laser light into heat, whereupon one or more of the partial mirror, the buffer layer, the thick reflective layer, or the substrate is deformed. If a metal partial mirror is used, the dye layer thickness may be decreased because the partial mirror also absorbs the laser light and improves the optical signal amplitude by a Fabry-Perot etalon. Therefore, the discs according to this invention are less dependent on the wavelength. Suitable dyes must therefore absorb in the wavelength range of the writing laser used. For CDs according to the CD standard, which are written with a 780 nm laser, near-infrared absorbing dyes, absorbing in the wavelength range of 780 to 850 nm, are used. Examples are anthraquinone dyes: IR-750®, ex Nippon Kayaku Co. Ltd, squarilium dyes: NK-2772®, ex Nippon Kankoh-Shikiso Kenkyusho Co. Ltd, bis-[3-(7-isopropyl-1-methyl)-azulene-4-yl-2-ethyl-propionic acid n-butyl ester] squaric acid dye (EP 0,310,080, example 16), dyes described in EP 0,310,080, and croconium dyes: ST 172®, ex Syntec, ST 9/3®, ex Syntec, ST 9/1®, ex Syntec, phthalocyanihe dyes: copper(II)-1,4,8,11,15,18,22,25-octabutoxy-29H,31 H-phthalocyanine, zinc-1,4,8,11,15, 18,22,25-octabutoxy-29H,31H-phthalocyanine, ex Aldrich. Preferred dyes are cyanine dyes, such as L-04, S-04, or mixtures thereof, and dyes selected from Victoria Blue, Luxol Fast Blue, and Malachite Green Oxalate, or mixtures thereof. A mixture of L-04, S-04, and the singlet oxygen quencher IRG-022 is also preferred.

The buffer layer may contain up to nearly 100% by weight dye. However, it is preferred to employ an amount up to 60% by weight. The buffer layer may also comprise stabilizers and/or ¹O₂-quenchers (for example Perkacit®) to improve the stability of the layer. For applying the buffer layer, the high-molecular weight material and optionally the dye and other additives are, preferably, solved in a suitable solvent and spin-coated. Other conventional means of applying coatings with accurate thicknesses may also be employed.

As mentioned above, the absorption coefficient of the buffer layer in combination with the optical parameters of the partial mirror influences the reflection and absorption of the Fabry-Perot. The absorption coefficient is determined by the dye concentration and its extinction coefficient in the buffer layer. This can be used to determine the parameters for CDs according to the invention which comply with the CD standard.

The thick reflective layer is a metal layer of gold, aluminum, silver, or an alloy thereof, superposed onto the buffer layer by, for instance, chemical vapor deposition or sputtering. This thick layer should not be transparent to the laser light. For conventional CDs a light transmission of 0-5% is preferred. Silver or an alloy thereof is preferred.

The protective coating (5) can be any resin having a high impact resistance. Usually a UV curable resin is used, which is applied by spin-coating, followed by UV irradiation for curing. Other suitable materials for the protective coating are epoxy resins, acrylate resins, silicone hard coat resins, and urethane resins. The thickness of the protective coating is not critical and is usually within the range of 3 to 30 µm, preferably 5 to 15 µm.

The invention is further directed to a method for the fabrication of an optical recording medium according to the invention. Said method comprises the steps of:
- applying a partial mirror onto a grooved substrate,
- applying a buffer layer onto said partial mirror,
- applying a thick reflective layer onto said buffer layer.

As mentioned-above, the partial mirror and thick reflective layer can be applied by, for instance, vacuum deposition, electron beam deposition, or sputtering. The buffer layer may be applied by, for instance, spin-coating.

This method of fabrication can easily be made into a continuous process. An apparatus for fabrication of conventional read-only CDs can easily be adapted for the fabrication of the optical recording medium according to the invention by inserting means for applying the partial mirror, and means for applying the buffer layer into the conventional line. The invention is also directed to an apparatus for the continuous fabrication of an optical recording medium according to the invention, comprising:
- means for transporting a grooved substrate,
- means for applying a partial mirror onto said substrate,
- means for applying a buffer layer onto said partial mirror,
- means for applying a thick reflective layer onto said buffer layer.

The invention will be further elucidated with reference to the following examples.

### Example 1

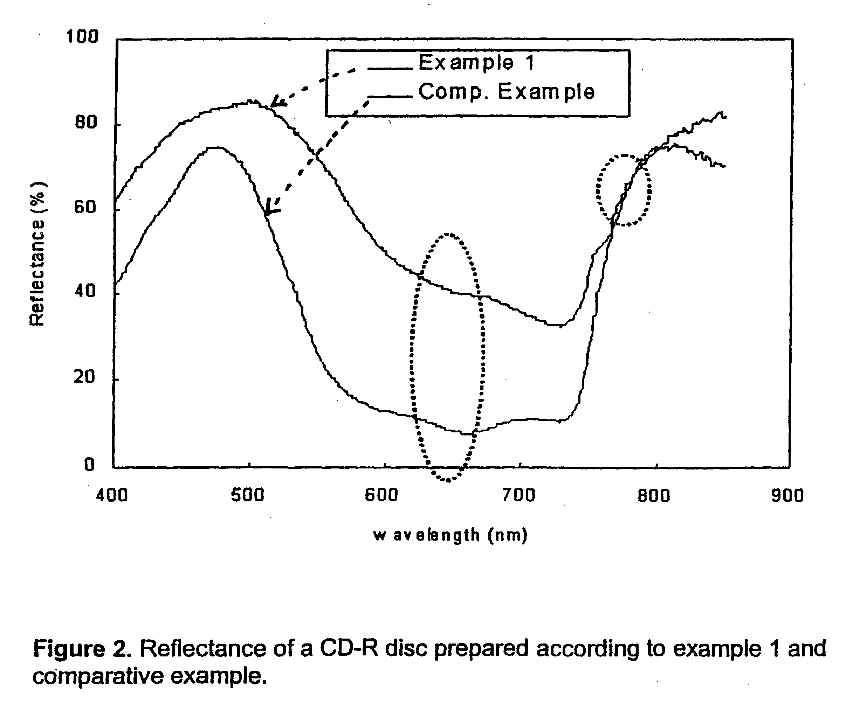

By means of standard procedures, as disclosed *inter alia* in PCT/EP9605373, a CD-R was prepared comprising a polycarbonate substrate, partial mirror, buffer layer, thick reflective layer, and protective coating as follows:
Substrate: polycarbonate; groove depth 190 nm, groove width (FWHM) 350 nm, track pitch 1.6 µm.
Partial mirror: silver, transmission 80% at 780 nm on a portion without groove.
Buffer layer: mixture of Luxol Fast Blue MBSN/L-04/Perkacit® NDBC ( 3.6 wt.% solids; ratio 47.6/45.6/6.77). n_{bu} = 1.94 and k_{bu} = 0.007 at 780 nm. Layer thickness 60 nm (on the land portion) and groove image of 60% of groove depth.
Thick reflective layer: silver, thickness 100 nm.
Protective coating: cross-linked epoxy-containing polyacrylate, thickness 5-10 µm
The resulting CD was evaluated using an evaluation equipment employing a laser beam of 780 nm. A signal to noise ratio (CNR) of a recorded 3T signal of 55 dB was obtained at 1.2 m/sec, 720 kHz and 8 mW recording conditions with 0.7 mW reading power, a reflectivity of 77% was obtained in the land and a reflectivity (Rtop) of 70% was obtained. The disc is replayable in commercial compact disc players. Jitter values were well below 35 ns. The reflectance of this disc was 40% at 650 nm (Fig 2) measured by UV spectroscopy (Shimadzu MPC-3100). Recorded music was playable on a Panasonic DVD-A3000 player.

### Example 2

A CD as in Example 1 was prepared, having:
Partial mirror: tantalium with a transmission of 70% at 780 nm on a portion without groove.
Buffer layer: mixture of Luxol Fast Blue MBSN/L-04/IRG 022 (ratio 33/60/7) with 3.2 wt.% solid content, spun to a layer thickness of 60 nm on the land portion and having a groove image of 60% of groove depth.

The resulting CD was evaluated using an evaluation equipment employing a focussed laser beam with a wavelength of 780 nm, analyzing an area recorded with 2x and 4x the writing speed of 1.2 m/s in a commercial recorder employing a writing laser beam at a similar wavelength of 780 nm. The resulting reflectivity (Rtop) was 70% and the optimum writing power was observed as 11 mW at 2x writing speed. The CD could be recorded and replayed on commercial compact disc recorders/players. The reflectance at 650 nm was 37% and the recorded disc was playable by DVDP.

### Example 3

A CD as in Example 2 was prepared, having:
Buffer layer: mixture of Luxol Fast Blue MBS N/L-04/IRG 022 (ratio 48/45/7) with 3.2 wt.% solid content, spun to a thickness of 60 nm on the land portion and having a groove image of 60% of groove depth.

The resulting CD was evaluated in a similar way as in Example 2, leading to a reflectivity (Rtop) of 65%. Other parameters, including but not limited to land- and pit-jitter values, were well within the Orange Book II (version 2.9) requirements at 2x writing speed. The CD could be recorded and replayed on commercial compact disc recorders/players. The reflectance at 650 nm was 42% and the recorded disc was playable by DVDP.

### Example 4

A CD as in Example 3 was prepared, having:
Substrate: polycarbonate; groove depth 230 nm, groove width 450 nm (FWHM), track pitch 1.6 µm
Partial mirror: Ag as in Example 3, leading to a transmission of 60% on above-mentioned substrate.

The resulting CD was evaluated as in Example 3, leading to a reflectivity (Rtop) of 65% and a 2x writing speed optimum power of 11 mW, cross-talk being well below 20% (<50% being required by the Orange Book). Other relevant parameters had specifications well within the Orange Book requirements. This CD could be recorded and replayed on commercial compact disc recorders/players. The reflectance at 650 nm was 40% and the recorded disc was playable by DVDP.

### Example 5

A CD as in Example 4 was prepared, having:
Substrate: as in Example 4 with track pitch of 1.5 µm

The resulting CD was evaluated as in Example 4, leading to essentially similar evaluation results with somewhat improved jitter values (2 to 5 ns).

### Example 6

A CD as in Example 5 was prepared, having:
Buffer layer: mixture of washed an purified Victoria Blue B/L-04/IRG 022 (ration 30/60/10) at 3.5 wt.% solid content of a solution as described and spun in Example 2.

The resulting CD was evaluated as in Example 5, showing land- and pit-jitter values well below 35 ns at a recorded area obtained by 2x as well as 4x writing speeds using a commercial CD recorder. Resulting pit- and land-length deviations were within the range specified in the Orange Book II, showing an much flatter behaviour for 3T to 11T pit- and land-mark length differences (60 ns to 90 ns, respectively) than Orange Book differences allow (150 ns and 130 ns, respectively). The disc could be recorded and replayed on commercial compact disc recorders/players.

### Example 7

A CD as in Example 6 was prepared, having:
Substrate: as in Example 6, but with groove depth of 260 nm
Buffer layer: as in Example 6, with a modified spincoating sequence.
The resulting CD was evaluated in a similar way as in previous examples.

### Comparative Example 1 (example 1 of EP 0,353,391)

A coating solution of 0.65 g of NK3219 in 10 ml of diacetone alcohol was spin-coated on the pregrooved polycarbonate substrate. The geometry of the pregroove was as follows: depth 80 nm, half width 600 nm, track pitch 1600 nm. The disc was recordable by a CD-R recorder (Yamaha 400TX) and playable on a CD player (Philips CDP Mkll), but playback on a DVDP was impossible. The reflectance of this disc as measured by a UV spectrometer was less than 12% at 650 nm (Fig 2).

## Claims

1. An optical recording medium comprising the following layers:
a) a polycarbonate substrate with a groove (1) having a depth d_{gu} in the unwritten state between 170 and 270 nm, superposed by
b) a recording layer comprising a partial mirror (2), superposed by a thick reflective layer (4) of Au, Al, Ag, or alloys thereof, together forming a Fabry-Perot etalon wherein the reflection of the land portion at 770-790 nm is in the high reflective state, superposed by
c) a protective coating (5),
**characterized in that** the partial mirror (2) is of a material selected from Ag, Ta, V, Ni, Cr, Si, alloys thereof, and oxides thereof, and having a transmission between 40% and 90% at 770-790 nm on a portion of the substrate without a groove, superposed by a buffer layer (3) comprising an organic material having a refractive index n_{bu} between 1.45 and 3.0, and an extinction coefficient k_{bu} between 0 and 0.3, both measured in its solid state at 770-790 nm in the unwritten state, and thickness d_{b} on the land between 10 and 70 nm, having a depth dᵢ of the groove image being 40% to 90% of the depth d_{gu}.

2. The optical recording medium of claim 1 wherein the refractive index n_{bw} and the extinction coefficient k_{bw} in the written state are smaller than n_{bu} and k_{bu}, respectively.

3. The optical recording medium of claim 1 or 2 wherein the depth d_{gw} of the written portion of the groove is smaller than the depth of the groove d_{gu} in the unwritten state.

4. The optical recording medium of any one of claims 1-3 wherein d_{gu} is 180 to 240 nm.

5. The optical recording medium of any one of claims 1-4 wherein the reflectance is more than 30% at a wavelength of 650 nm and more than 60% at a wavelength of 780 nm.

6. The optical recording medium of any one of claims 1-5 wherein the partial mirror is selected from Ag, Ta, oxides, and alloys thereof.

7. The optical recording medium of any one of claims 1-6 wherein the refractive index n_{bu} of the organic material is between 1.8 and 2.2.

8. The optical recording medium of any one of claims 1-7 wherein k_{bu} is between 0 and 0.05.

9. The optical recording medium of any one of claims 1-8 wherein thickness d_{b} is between 15 and 40 nm.

## Patentansprüche

1. Optisches Aufzeichnungsmedium, das die folgenden Schichten umfasst:
a) ein Polycarbonatsubstrat mit einer Spirale (1), die im unbeschriebenen Zustand eine Tiefe d_{gu} zwischen 170 und 270 nm aufweist, und darüber
b) eine Aufzeichnungsschicht, die einen teildurchlässigen Spiegel (2) umfasst, über dem eine dicke Reflexionsschicht (4) aus Au, Al, Ag oder Legierungen davon liegt, wobei diese zusammen ein Fabry-Perot-Etalon bilden, wobei die Reflexion des Landteils bei 770-790 nm im hochreflektierenden Zustand liegt; und darüber
c) eine Schutzschicht (5);
**dadurch gekennzeichnet, dass** der teildurchlässige Spiegel (2) aus einem Material besteht, das aus Ag, Ta, V, Ni, Cr, Si, Legierungen davon und Oxiden davon ausgewählt ist, und auf einem Teil des Substrats ohne Spirale eine Transmission zwischen 40% und 90% bei 770-790 nm hat, und darüber eine Pufferschicht (3), die ein organisches Material mit einem Brechungsindex n_{bu} zwischen 1,45 und 3,0 und einem Extinktionskoeffizienten k_{bu} zwischen 0 und 0,3, beide gemessen im festen Zustand bei 770-790 nm im unbeschriebenen Zustand, und einer Dicke d_{b} auf dem Land zwischen 10 und 70 nm umfasst, mit einer Tiefe dᵢ des Spiralenbildes, die 40% bis 90% der Tiefe d_{gu} beträgt.

2. Optisches Aufzeichnungsmedium gemäß Anspruch 1, wobei der Brechungsindex n_{bw} und der Extinktionskoeffizient k_{bw} im beschriebenen Zustand kleiner als n_{bu} bzw. k_{bu} sind.

3. Optisches Aufzeichnungsmedium gemäß Anspruch 1 oder 2, wobei die Tiefe d_{gw} des beschriebenen Teils der Spirale kleiner ist als die Tiefe der Spirale d_{gu} im unbeschriebenen Zustand.

4. Optisches Aufzeichnungsmedium gemäß einem der Ansprüche 1-3, wobei d_{gu} 180 bis 240 nm beträgt.

5. Optisches Aufzeichnungsmedium gemäß einem der Ansprüche 1-4, wobei das Reflexionsvermögen bei einer Wellenlänge von 650 nm mehr als 30% beträgt und bei einer Wellenlänge von 780 nm mehr als 60% beträgt.

6. Optisches Aufzeichnungsmedium gemäß einem der Ansprüche 1-5, wobei der teildurchlässige Spiegel aus Ag, Ta, Oxiden und Legierungen davon ausgewählt ist.

7. Optisches Aufzeichnungsmedium gemäß einem der Ansprüche 1-6, wobei der Brechungsindex n_{bu} des organischen Materials zwischen 1,8 und 2,2 liegt.

8. Optisches Aufzeichnungsmedium gemäß einem der Ansprüche 1-7, wobei k_{bu} zwischen 0 und 0,05 beträgt.

9. Optisches Aufzeichnungsmedium gemäß einem der Ansprüche 1-8, wobei die Dicke d_{b} zwischen 15 und 40 nm liegt.

## Revendications

1. Milieu d'enregistrement optique comprenant les couches suivantes :
a) un substrat de polycarbonate avec un sillon (1) ayant une profondeur d_{gu} dans l'état non enregistré entre 170 et 270 nm, superposé par
b) une couche d'enregistrement comprenant un miroir partiel (2), superposé par une épaisse couche réfléchissante (4) d'Au, Al, Ag, ou d'alliages de ceux-ci, l'ensemble formant un étalon Fabry-Pérot dans lequel la réflexion de la partie de surface conductrice à 770 - 790 nm se situe dans l'état de réflexion élevée, superposée par
c) une couche de protection (5),
**caractérisé en ce que** le miroir partiel (2) est d'un matériau sélectionné dans le groupe composé d'Ag, Ta, V, Ni, Cr, Si, des alliages de ceux-ci, et des oxydes de ceux-ci, et ayant une transmission comprise entre 40 % et 90 % à 770-790 nm sur une partie du substrat sans un sillon, superposé par une couche tampon (3) comprenant un matériel organique ayant un indice de réfraction n_{bu} compris entre 1,45 et 3,0 et un coefficient d'atténuation k_{bu} compris entre 0 et 0,3, tous deux étant mesurés dans son état solide à 770-790 nm dans l'état non enregistré, et l'épaisseur d_{b} sur la surface conductrice entre 10 et 70 nm, ayant une profondeur dᵢ de l'image dans le sillon allant de 40 % à 90 % de la profondeur d_{gu}.

2. Milieu d'enregistrement optique selon la revendication 1, dans lequel l'indice de réfraction n_{bw} et le coefficient d'atténuation K_{bw} dans l'état enregistré sont inférieurs à n_{bu} et K_{bu}, respectivement.

3. Milieu d'enregistrement optique selon la revendication 1 ou 2, dans lequel la profondeur d_{gw} de la partie enregistrée du sillon est inférieure à la profondeur du sillon d_{gu} dans l'état non enregistré.

4. Milieu d'enregistrement optique selon l'une quelconque des revendications 1 à 3, dans lequel d_{gu} est de 180 à 240 nm.

5. Milieu d'enregistrement optique selon l'une quelconque des revendications 1 à 4, dans lequel la réflexion lumineuse est supérieure à 30 % à une longueur d'onde de 650 nm et supérieure à 60 % à une longueur d'onde de 780 nm.

6. Milieu d'enregistrement optique selon l'une quelconque des revendications 1 à 5, dans lequel le miroir partiel est sélectionné dans le groupe composé d'Ag, Ta, d'oxydes, et d'alliages de ceux-ci.

7. Milieu d'enregistrement optique selon l'une quelconque des revendications 1 à 6, dans lequel l'indice de réfraction n_{bu} du matériel organique est compris entre 1,8 et 2,2.

8. Milieu d'enregistrement optique selon l'une quelconque des revendications 1 à 7, dans lequel k_{bu} est de 0 à 0,05.

9. Milieu d'enregistrement optique selon l'une quelconque des revendications 1 à 8, dans lequel l'épaisseur d_{b} est de 15 à 40 nm.
